**Europäisches Patentamt**

**European Patent Office**

**Office européen des brevets**

(19)

(11) Veröffentlichungsnummer: **0 062 787**

**A1**

(12) # EUROPÄISCHE PATENTANMELDUNG

(21) Anmeldenummer: **82102352.0**

(22) Anmeldetag: **22.03.82**

(51) Int. Cl.³: **G 01 B 11/06**
**B 41 F 33/00**

(30) Priorität: **04.04.81 DE 3113674**

(43) Veröffentlichungstag der Anmeldung:
**20.10.82 Patentblatt 82/42**

(84) Benannte Vertragsstaaten:
**CH FR GB IT LI SE**

(71) Anmelder: **grapho metronic Mess- und Regeltechnik**
**GmbH & Co. KG**
**Gaisbergstrasse 7**
**D-8000 München 80(DE)**

(72) Erfinder: **Wirz, Burkhardt, Dr.**
**Rabenkopfstrasse 41**
**D-8000 München 90(DE)**

(72) Erfinder: **Feulner, Walter, Dr.**
**Münchener Strasse 34**
**D-8039 Puchheim Obb.(DE)**

(74) Vertreter: **Münkel, Horst, Dipl.-Ing.**
**Bozzarisstrasse 7**
**D-8000 München 90(DE)**

(54) **Vorrichtung zum Messen der Feuchtmittelmenge auf der Druckplatte einer Offset-Druckmaschine.**

(57) Für eine Vorrichtung zum Messen der Feuchtmittel-Schichtdicke auf der Druckplatte einer Offset-Druckmaschine während des Druckens mit Hilfe impulsförmiger Lichtströme innerhalb enger Wellenlängenbandbereiche, deren remittierte Strahlung von photoelektrischen Lichtempfängern (63, 65) aufgenommen und in elektrische Impulse umgesetzt wird, die dann in einer Auswertschaltung (11) zur Bestimmung der Schichtdicke ausgewertet werden, dient als Lichtimpulsquelle eine helltastbare Lampe (57). Die Strahlung der helltastbaren Lampe (57) wird zum Teil direkt, zum Teil vom Meßfleck (2a) auf der Druckplatte (2) remittiert, durch monochrome Filter (62, 64) einzelnen Lichtempfängern (63, 65) zugeleitet, deren unterschiedlich große Ausgangssignale dann zur Ermittlung der Feuchtmittel-Schichtdicke ausgewertet werden. Die Lampe ist eine Entladungsblitzlampe (57) oder eine Glühfadenlampe im Überspannungsimpulsbetrieb.

FIG. 4

## Vorrichtung zum Messen der Feuchtmittelmenge auf der Druckplatte einer Offset-Druckmaschine

Die Erfindung betrifft eine Vorrichtung zum Messen der Feuchtmittelmenge auf der Druckplatte einer Offset-Druckmaschine gemäß Oberbegriff des Patentanspruchs 1.

Wie in den deutschen Patentschriften 1 303 819, 2 412 194 und 2 412 234 beispielsweise beschrieben, wird die Feuchtmittelschichtdicke auf der Druckplatte mit Hilfe von Strahlen unterschiedlicher Wellenlängen im Infrarotbereich ermittelt. Die von Glühlampen ausgehende Strahlung wird dabei durch mechanische Zerhacker-Impulseinrichtungen und Filter oder Spiegel in zeitlich abwechselnder Folge von Strahlung unterschiedlicher Wellenlänge auf bildfreie Stellen der Druckplatte gelenkt. Der diffus remittierte Teil der Strahlung wird dann wellenlängenspezifisch nach seiner empfangenen Intensität proportional umgewandelt und ausgewertet. Dabei wird die Wellenlänge eines Meßstrahls stets so gewählt, daß dessen Licht durch das Feuchtmittel stark und in einem bekannten Verhältnis zur Schichtdicke beeinflusst wird, während die Wahl der Wellenlänge eines Vergleichsstrahles so getroffen wird, daß möglichst geringe Beeinflussung durch die Feuchtmittelschichtdicke auftritt.

Für die Erzeugung der Impulsketten von Meß- und Vergleichsstrahl sind bisher schnell rotierende Filter-, Spiegel- oder Lochscheiben nötig, die verständlicherweise störanfällig sind und in modernen Druckmaschinen kaum zur Verfügung stehenden Platz benötigen, speziell, wenn zur Erhöhung der Meßgenauigkeit die Vorrichtung über die gesamte Plattenbreite verfahrbar sein soll. Impulsbetrieb ist jedoch nötig, um im Anschluß an den Ausgang des verwendeten einzigen Lichtempfängers eine Aufteilung in Meß- und Vergleichsstrahlimpulse vornehmen und die Meßauswertung durchführen zu können, aber auch, um in der Dunkelphase eine eindeutige Nullpegelfixierung der Auswertschaltung vorzunehmen, die in aller Regel mit Fotowiderständen arbeitet.

Um wenigstens je einen Impuls des Meß- und eines Vergleichsstrahls je Plattenzylinderumdrehung zur Auswertung zur
Verfügung zu haben, wird jedoch, da die Filter-, Spiegel-
oder Lochscheibenumdrehung nicht beliebig gesteigert werden
kann, besonders bei den hohen Geschwindigkeiten moderner
Druckmaschinen ein relativ großer Meßort in Umfangsrichtung
benötigt, denn um mit Sicherheit bei der nicht synchronisierten Scheibe zwei vollständige Impulse erfassen zu können,
muß eine Meßlänge über drei Impulse einschließlich der
dazwischenliegenden Lücken zur Verfügung stehen. Dies ist
aber bei sehr dichter Bildbesetzung der Druckplatte nicht
immer erreichbar. Ein von Bildern freier Bogenquerrand z.B.
bietet dafür bei hoher Druckgeschwindigkeit keine ausreichende Länge. Außerdem variieren die Bildpositionen abhängig vom Druckauftrag, so daß stets neue Stellen für die
Messung gefunden werden müssen.

Bei vielen Drucksystemen wird entlang einer Bogenquerkante eine Farbkontrolleiste mitgedruckt, die bei jedem
Druck einer einzelnen Farbe innerhalb jeder Farbzone von
zonengesteuerten Farbwerken farbfreie Stellen aufweist.
Aber auch ihre Drucklänge in Umfangsrichtung stellt bei
hohen Druckgeschwindigkeiten keine für die herkömmlichen
Feuchtmittelmengen-Meßvorrichtungen ausreichende Meßlänge
zur Verfügung.

Als Dauerlichtstrahl abgebende Lichtquelle wird bei derzeit eingesetzten Meßvorrichtungen mit Zerhackerscheiben
eine Glühlampe verwendet. Diese wird gleichförmig gespeist
und gegebenenfalls noch mit Unterspannung betrieben
(siehe DE-PS 24 12 194), um eine möglichst hohe Ausbeute
an Infrarotlicht der gewünschten Wellenlängen bei hoher
Lebensdauer zu erhalten. Durch den Dauerbetrieb der Lampe
tritt eine erhebliche Wärmeentwicklung auf, wodurch die Gefahr besteht, daß die bis herunter zu 1 µm dünne
Feuchtmittelschicht verdampft. Benötigt wird der Lichtstrom zwar nur während der Meßdauer, die nur einen Bruchteil der für den Zylinderumlauf benötigten Zeit ausmacht,
doch kann wegen ihrer "Trägheit" die Glühfadenlampe mit
ihrer normalen Speisespannung nicht intermittierend betrieben werden, so daß der Wirkungsgrad schlecht ist.

Aufgabe ist es, eine Meßvorrichtung der oben genannten Art
zu schaffen, die wenig Platz zu ihrer Unterbringung in der
Druckmaschine benötigt, die wenig störanfällig und wartungsbedürftig ist, deren Impulslichterzeugung mit geringer
Verlustwärmeentwicklung verbunden ist, und die auf der
Druckplatte nur eine sehr kleine Meßfläche benötigt.
Überdies soll das Meßergebnis so wenig wie möglich von
äußeren Störfaktoren verfälscht sein.

Die Lösung erfolgt mit den kennzeichnenden Merkmalen des
Anspruchs 1. Durch Einsatz einer zu einer Druckplattenrelativstellung synchron helltastbaren Lampe kann die
mechanische, rotierende Filterscheibenvorrichtung mit ihrem
Antrieb entfallen. So wird wenig Platz benötigt, und die
Störanfälligkeit und Wartungsbedürftigkeit sind wesentlich
herabgesetzt. Weil der Lichtimpuls nur im erforderlichen
Augenblick abgegeben wird, ist das Leistungs/Nutz-Verhältnis sehr günstig; damit entfällt die Gefahr, daß sehr
dünne Feuchtmittelschichten durch die Messung beeinträchtigt
werden. Die Messung kann mit einem einzigen Lichtimpuls
durchgeführt werden. Der bildfreie Platz in Umfangsrichtung
braucht deshalb nur die für einen Meßlichtimpuls erforderliche Länge zu haben. Dieser Lichtimpuls kann mit einfachen
Mitteln exakt getriggert werden.

Eine einzige Lampe gibt ihren Lichtstrom auf die bildfreie
Stelle der Druckplatte impulsförmig ab, wobei dann das von dieser Stelle remittierte Licht durch praktisch gleiche Wege auf ein erstes lichtempfindliches Element mit vorgeschaltetem monochromem Filter für ein erstes Wellenlängenband und auf ein zweites lichtempfindliches Element mit vorgeschaltetem monochromem Filter für ein zweites Wellenlängenband trifft. Die Auswertung der Ausgangssignale der Lichtempfänger kann dann auf seit Jahren in der einschlägigen Praxis bekannte Weise auf elektronischem Wege erfolgen, um die Feuchtmittelschichtdicke zu bestimmen, wozu nur beispielhaft auf die DE-PS 1 303 819 verwiesen wird.

Es ist auch möglich, nur über einem der Strahlungsempfänger mit monochromem Filter von der befeuchteten Platte remittierte Strahlung aufzufangen und den zweiten Strahlungsempfänger mit seinem monochromem Filter dem direkten Lichtstrom von der Lampe auszusetzen. Die Verarbeitung der Ausgangssignale der Strahlungsempfänger zu einem Schichtdicken-Meßwert ist bei den beiden Verfahren grundsätzlich gleich.

o Der Einsatz einer kurzzeitig helltastbaren Lampe als Strahlungsquelle lag für den Fachmann nicht nahe. Der Stand der Technik lieferte ihm für die sehr kurzen Meßzeiten keinen Hinweis auf eine Strahlungsquelle, die in der benötigten kurzen Dauer mit entsprechend kurzer Anstiegszeit Infrarotstrahlung von ausreichender Intensität liefert.

Es ist zwar bekannt, daß Entladungsblitzlampen zum Beleuchten verwendbar sind, d. h. im Spektralbereich des sichtbaren Lichtes ihr Anwendungsgebiet haben, was durch das zu ihrer Kennzeichnung von ihnen stets angegebene Intensitätsspektrum im Wellenlängenbereich zwischen 0,2 und 0,9 µm zum Ausdruck kommt. Sie werden auch in der Drucktechnik in Densitometern zur Farbdichtemessung eingesetzt (DE-OS 20 11 979).

Es ist aber nicht bekannt oder dem Fachmann geläufig gewesen, daß Blitzlampen überhaupt zur Erzeugung von Strahlung im Infrarotspektralbereich und darüber hinaus in einer für die Feuchtmittelmengenmessung ausreichenden Intensität bei derartigen Wellenlängen verwendbar sind. Er konnte nicht damit rechnen, hinter einem schmalbandigen Infrarotfilter überhaupt noch Strahlung feststellen zu können, sondern mußte zunächst ein herrschendes, beträchtliches Vorurteil gegen die Benutzung einer Entladungsblitzlampe für den Infrarotbereich überwinden, um die Entladungsblitzlampe überhaupt als mögliche Strahlungsquelle in die Überlegungen einzubeziehen. Ob tatsächlich in der Gassäule der Entladungsblitzlampe während der elektrischen Entladung Strahlung im Infrarotspektralbereich erzeugt wird oder ob hierfür Sekundäreffekte aufgrund von Anregungen durch kurzwellige, energiereiche Strahlungsanteile verantwortlich sind, ist bisher nicht geklärt.

Der Fachmann konnte auch nicht auf Kurzzeitbetrieb einer Glühfadenlampe zurückgreifen. Er hätte feststellen müssen, daß der Glühfaden mit ihrer Normalspannung kaum innerhalb der Dauer einer vollen Plattenzylinderumdrehung auf die erforderliche Temperatur aufzuheizen ist, geschweige denn bis zum nächsten Beaufschlagen mit Strom für die nächste Messung wieder eine stabile Ausgangstemperatur angenommen hätte, von der aus der nächste Aufheizvorgang vorgenommen wird.

Verwendet man, wie dies bei einer Ausführungsform der Erfindung geschieht, eine Entladungsblitzlampe als Impulslichtquelle, so hat der Erfinder einen generellen Widerstand überwunden, denn diese Lampen gelten allgemein als Quellen für "kaltes", d. h. rotarmes Licht. In der Tat umfaßt das für Entladungsblitzlampen im allgemeinen angegebene Intensitätsspektrum den Wellenlängenbereich zwischen 0,2 und 0,9 µm, während für in Rede stehende Meßvorrichtungen

Meß- und Vergleichsstrahlwellenlängen von mehr als 2,2 µm bis zu einem Vielfachen davon erforderlich sind. Dennoch durchgeführte Versuche haben aber die Brauchbarkeit und sogar ein verbessertes Signal/Rausch-Verhältnis bei Verwendung einer Blitzlampe als Lichtquelle erbracht.

Bei einer anderen Ausführungsform wird eine Glühfadenlampe im Kurzzeit-Überspannungsimpulsbetrieb gespeist, womit sehr steile Lichtimpulsanstiegsflanken erreichbar sind, wenn ein Mehrfaches der Nennspannung zugeführt, dann aber sehr schnell wieder abgeschaltet wird, um der Zerstörung der Lampe vorzubeugen.

Man ist dadurch in der Lage, auf einem sehr kurzen Meßort in Umfangsrichtung des Plattenzylinders mit einer einfachen Synchronisierung gegenüber dem Plattenzylinder bei jeder Zylinderumdrehung zu messen und außerdem eine für den Lichtempfänger in Verbindung mit seiner Auswertschaltung benötigte Nullpegel-Bezugsgröße im Zwischenzeitraum abzunehmen.

Wenn die Meßvorrichtung parallel zur Plattenzylinderachse verstellbar angebracht wird, besteht nicht nur die Möglichkeit, die bei den Drucken in den verschiedenen Farben jeweils verschiedenen farbfreien Stellen innerhalb einer entlang einer Bogenquerkante verlaufenden Farbkontrolleiste als Meßort auszuwählen, sondern man kann darüber hinaus in Plattenzylinderachsrichtung gesehen unterschiedliche Feuchtmittelverteilung feststellen, für deren Auftreten es verschiedene Gründe gibt.

Zur Lenkung des Lichtstromes von der Lampe auf die Meßstelle ist es zweckmäßig, eine Spiegeloptik zu verwenden, die die Lampe teilweise umstellt.

Zum besseren Verständnis wird die Erfindung nun anhand der Zeichnung in Verbindung mit einigen Ausführungsbeispielen näher erläutert. Im einzelnen zeigen:

Fig. 1 eine schematische Seitenansicht einer Offset-Druckmaschine mit einer Vorrichtung zum Messen der
Feuchtmittel-Schichtdicke;

Fig. 2 ein Schemabild einer ersten Ausbildung der wesentlichen Teile des Meßkopfes;

Fig. 3 ein Schemabild der Ausbildung der erfindungsgemäßen
Vorrichtung in einer zweiten Ausführungsform;

Fig. 4 in schematischer Wiedergabe die Steuerung der
Lichtimpulsauslösung;

Fig. 5 das Beispiel einer Speisungsschaltung einer Glühfadenlampe in Überspannungsimpulsbetrieb;

Fig. 6 Impuls-Zeitabläufe zur Erklärung der Arbeitsweise
der Schaltung in Fig. 5.

Eine auf einem Plattenzylinder 1 einer Offset-Druckmaschine
aufgespannte Druckplatte 2 wird in üblicher Weise durch
ein Feuchtwerk, das insgesamt mit 3 bezeichnet ist, befeuchtet und anschließend durch ein Farbwerk 4 eingefärbt.
Feuchtmittel wird von einer Feuchtkastenwalze 5 einem mit
Feuchtmittel gefüllten Behälter 6 entnommen und über eine
Zwischenwalze 7, die eine Reiberwalze sein kann, einer
Auftragwalze 8 übertragen, durch die das Feuchtmittel
schließlich auf die Druckplatte 2 aufgebracht wird. Die
Feuchtkastenwalze 5 wird von einem Motor 9 angetrieben,
der im vorliegenden Fall als drehzahlregelbarer Motor
dargestellt ist.

Mit geringem Abstand steht im wesentlichen radial über
der Druckplatte 2 ein Meßkopf 10, in dem eine helltastbare Lampe, Filter mit engen Wellenlängenbandbereichen
im Infrarot-Wellenlängenbereich und photoelektrische Lichtempfänger enthalten sind, die in der Lage sind, auf sie
treffende Lichtimpulse in proportionale elektrische Signale
umzuwandeln, die dann einer Auswertschaltung 11 zugeleitet
werden, welche eine an sich bekannte Ausbildung etwa nach dem Prinzip der Auswertschaltung der DE-PS 1 303 819 haben kann und in der aus den Meßwerten die Feuchtmittelschichtdicke auf einer bildfreien Stelle der Druckplatte 2 im Augenblick des Auftreffens des Lichtimpulses ermittelt wird. Damit der Lichtimpuls auf eine vorbestimmte Stelle der Druckplatte, an der mit Sicherheit kein Bild vorhanden ist, auftrifft, wird die Lampe mittels einer an sich bekannten, später noch anzugebenden Triggervorrichtung synchronisiert hellgetastet. Die Triggerauslösung kann beispielsweise durch eine Marke, die auf die Druckplatte aufkopiert ist, erfolgen. Der Meßkopf 10 ist entlang einer Schiene 14 verstellbar.

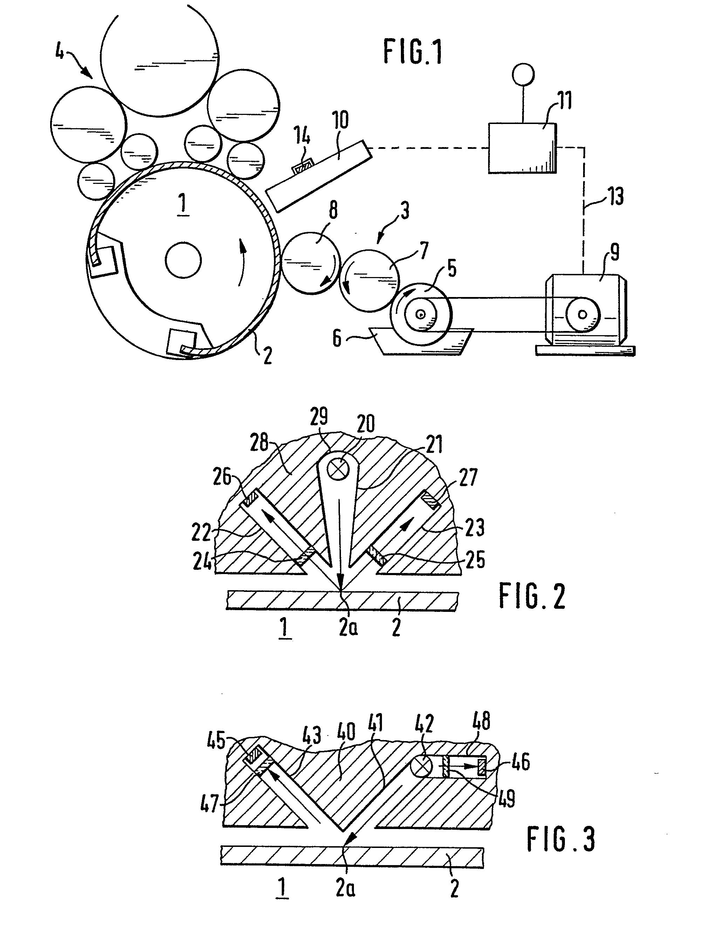

Es ist denkbar, aufgrund der in der Auswertschaltung 11 ermittelten Feuchtmittelschichtdicke eine Drehzahlanpassung des Antriebsmotors 9 vorzunehmen, weshalb in der Fig. 1 gestrichelt eine Verbindung 13 zwischen der Auswertschaltung 11 und dem Motor 9 dargestellt ist.

Das Schemabild der Fig. 2 gibt einen Ausschnitt eines Schnittes in einer Ebene wieder, die auf der Ebene der Fig.1 senkrecht steht und radial zur Achse des Plattenzylinders 1 durch den Meßkopf 10 verläuft. Gleiches gilt für die Darstellung der Figur 3.

In der Fig. 2 ist eine erste Ausführungsform der Erfindung wiedergegeben. Eine Lampe 20 befindet sich am Ende eines Lichtkanals 21. Sobald die Lampe 20 durch die oben erwähnte Synchronisierung hellgetastet wird, gibt sie einen Impulslichtstrahl auf die mit Feuchtmittel beschichtete Druckplatte 2 ab. Von der beleuchteten Stelle 2a diffus remittiertes Licht gelangt, wie es die Pfeile andeuten, in zwei symmetrisch zu beiden Seiten des Lichtkanals 21 angeordnete Empfängerkanäle 22, 23, in denen sich Bandfilter 24, 25 befinden, welche nur enge Wellenlängenbänder der remittierten Strahlung durchlassen, die dann auf Lichtempfänger 26, 27 am Grunde der Kanäle 22 bzw. 23 fallen.

Die Kanäle selbst befinden sich innerhalb eines Blockes 28 aus einem hier nicht näher interessierenden Material, der im wesentlichen den Meßkopf 10 der Fig. 1 bildet.

Die Lichtempfänger 26 und 27 können nunmehr gleichzeitig von ein und demselben Meßfleck 2a auf der Druckplatte 2 remittiertes Licht des von der Lampe 20 ausgesandten Lichtimpulses auffangen, und zwar jeder Lichtempfänger 26 bzw. 27 innerhalb des schmalen Durchlaßbandes des ihm zugeordneten Filters 24 bzw. 25. Die Verwendung von zwei Lichtempfängern 26, 27 ist möglich, da diese innerhalb kürzerer Zeitspannen über einem Eichnormal auf gleiche Empfindlichkeit nachgeeicht werden können und die selbst so stabil sind bzw. temperaturstabil gehalten werden, daß ihre Eichungen nicht über Gebühr auseinanderdriften. Es ist dann möglich, Messungen nach einer Methode beispielsweise gemäß den deutschen Patentschriften 13 03 819, 24 12 194 oder 24 12 234 vorzunehmen bei zeitgleichen Impulsen.

Eine weitere Ausführungsform des Meßkopfes ist in seiner speziellen Ausgestaltung in der Fig. 3 dargestellt.

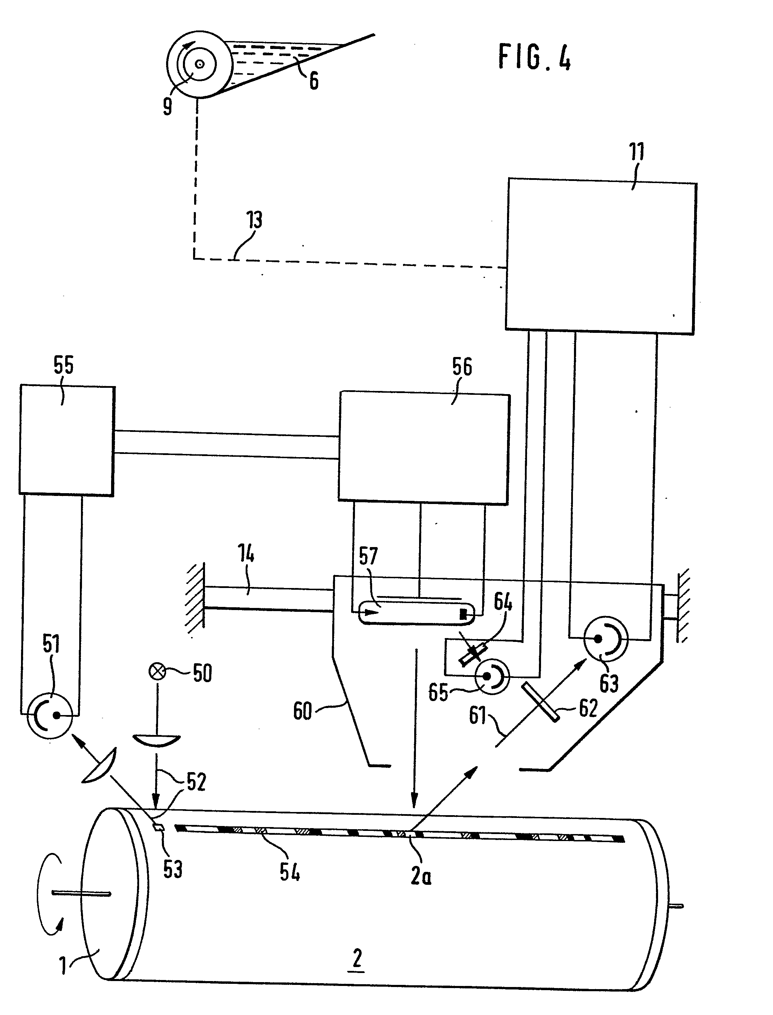

Am Ende eines auf die Oberfläche der Druckplatte 2 gerichteten geraden Abschnitts des Lampenkanals 41 im Meßkopf 40 befindet sich die helltastbare Lampe 42, die Lichtimpulse auf den Meßfleck 2a auf der Druckplatte 2 aussendet, wenn sie getriggert wird. Von diesem Meßfleck 2a remittierte Strahlung gelangt in den Lichtempfängerkanal 43. Vor den Lichtempfänger 45 ist ein Filter 47 gesetzt, mit dessen Hilfe dem Lichtempfänger 45 remittiertes Licht einer eng begrenzten Wellenlängenbandbreite zugeleitet wird. In einer rückwärtigen Verlängerung 48 des Lampenkanals 41 in Fig. 4 befindet sich ein photoelektrischer Referenzstrahlempfänger 46 mit vorgesetztem Schmalbandfilter 49, auf den von der Lampe 42 bei jeder Lichtimpulsabgabe Licht auftrifft und der dieses Licht in elektrische Signale umwandelt. Die Durchlaßbänder der Filter 47 und 49 sind vorzugsweise gleich.

Beide Lichtempfänger erhalten wie beim Meßkopf nach
Fig. 2 gleichzeitig von einem einzigen Lichtimpuls
der Lampe 42 die Lichtenergie, und ihre Ausgangssignale
werden zur weiteren Verarbeitung in gleicher Weise wie
bei der Ausführungsform gemäß Fig. 2 der nachgeschalteten Auswertschaltung 11 zugeleitet.

Für die Weiterverarbeitung und Auswertung in der Auswertschaltung 11 sind die Filter 24 bzw. 47 beispielsweise so
gewählt, daß sie die durch das Feuchtmittel beeinflußte
Wellenlänge der Strahlung durchlassen (Meßstrahl), während
die Filter 25 bzw. 49 eine Durchlaßwellenlänge haben, bei
der zumindest im Falle der Ausführung nach Fig. 2 die
Strahlung durch die Feuchtmittelschicht auf der Platte nicht
beeinflußt wird (Vergleichsstrahl, Referenzstrahl).

Maßnahmen zur Erhöhung der Lichtausbeute durch Verspiegeln
der Kanäle oder Umstellen der Lampen mit Spiegelflächen
29, wie in Fig. 2 angedeutet, sind dem Fachmann geläufig
und brauchen hier nicht näher ausgeführt zu werden.

Als Lampe zur Abgabe der Lichtblitze eignet sich sowohl
eine Entladungsblitzlampe als auch eine Glühfadenlampe,
die im Kurzzeit-Überspannungsimpulsbetrieb gespeist wird
und bei der durch die Speiseimpulsgröße Einfluß auf die
Glühfadentemperatur und damit das Spektrum der von ihr
ausgesandten Lichtblitze genommen werden kann. Insbesondere
ist es mit solchen Lampen möglich, auf einem Teil der Umlaufzeit des Plattenzylinders völlige Dunkelheit zu erzielen, was für die Messungen zum Zwecke des Nullpegelabgleichs der Lichtempfänger nötig ist.

Figur 4 zeigt schematisiert eine mögliche Form der
Lichtimpulsauslösung. Die Auslösung wird gesteuert von
einer Lichtquelle 50 in Verbindung mit einer Fotozelle 51, die infolge der Änderung der Lichtintensität des reflektierten Lichtstrahles 52 beim Passieren einer eigens auf die Platte 2 aufkopierten Auslösemaske 53 in Verlängerung der Farbkontrolleiste 54 einen Impuls an eine die Auslösung des Lichtimpulses bewirkende Auslösevorrichtung 55 abgibt. Diese löst über eine Speisungsschaltung 56 die hier als Blitzlampe gezeichnete Lichtimpulsquelle 57 im Meßkopf 60 aus. Der von dem Meßfleck 2a im Bereich der Farbkontrolleiste 54 remittierte Meßstrahl 61 durchläuft das Schmalbandfilter 62 und erzeugt am Ausgang des Meßstrahlempfängers 63 einen Meßimpuls, der gemeinsam mit einem Referenzimpuls von einem Filter 64 mit Referenzstrahlempfänger 65 ähnlich dem Empfänger 46 in Fig. 3 der Auswertschaltung 11 zugeleitet und dort zum Meßwert verarbeitet wird.

Der Meßkopf 60 ist auf der Schiene 14 gegenüber dem Plattenzylinder 1 verstellbar.

Wird als Lichtimpulsquelle eine Glühfadenlampe verwendet, so ist die Speisung der Lampe mit ihrer Nennspannung nicht möglich, da die Anstiegs-Zeitkonstante $\tau_L$ der Glühfaden-Temperatur $\vartheta_L$ selbst bei Miniatur- und Subminiaturlampen noch in der Größenordnung von ca. 100 - 200 ms liegt, so daß eine stabile Endtemperatur - und damit die Endhelligkeit und eine stabile Spektralverteilung der abgegebenen Strahlung - erst nach mehreren 100 ms erreicht wird.

Für die vorliegende Anmeldung ist es jedoch notwendig, die Endhelligkeit und somit die Endtemperatur $\vartheta_{end}$ des Glühfadens in einer sehr kurzen Zeit von z.B. 1 ms zu erreichen. Dies kann erfindungsgemäß durch einen kurzzeitigen Überspannungsbetrieb erreicht werden.

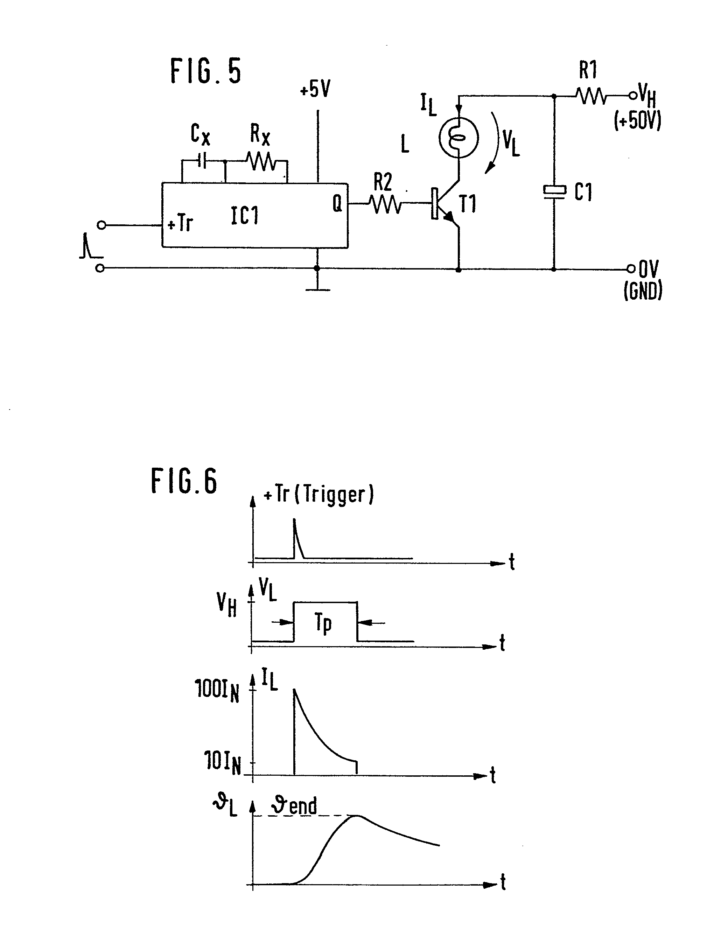

Eine einfache Schaltung für den Überspannungs-Impulsbetrieb zeigt die Fig. 5. Ein kurzer Triggerimpuls am Eingang +Tr einer monostabilen Kippschaltung IC1 "monostable multivibrator") erzeugt an dessen Ausgang Q einen Impuls $T_p$ (siehe Fig.6), so daß ein Transistor T1 über R2 angesteuert und leitend wird. Dadurch wird für die Dauer $T_p$ eine Überspannung $V_H$, die sehr viel größer als die Nennspannung $V_N$ ist, der Glühlampe L zugeführt.

IC1 ist Stand der Technik, vorzugsweise eine integrierte Schaltung mit den externen zeitbestimmenden Gliedern $R_x$ und $C_x$. Die Überspannung $V_H$ wird über R1 einem Puffer-Kondensator C1 zugeführt und lädt diesen ebenfalls auf die Spannung $V_H$ auf. Der Stromimpuls von einigen Ampère für die Glühlampe L wird dann jeweils diesem Puffer-Kondensator entnommen, so daß die Quelle von $V_H$ nur mit einem geringen Nachladestrom von einigen mA für C1 belastet wird.

Der Triggerstrom wird in an sich bekannter Weise (elektromechanisch oder rein elektronisch) bevorzugt aus der Umdrehung der Druckplatte auf dem Plattenzylinder abgeleitet, wie oben beschrieben, so daß der Lichtimpuls immer an der gleichen, vorher bestimmten Stelle der Druckplatte ausgelöst wird.

Die zeitlichen Vorgänge bei diesem Betrieb der Glühlampe mit Überspannungsimpulsen sind in Fig. 6 dargestellt. Wenn der Transistor T1 während der Impulsdauer $T_p$ durchschaltet, liegt die Überspannung $V_H$ an der Glühlampe L. Da $V_H$ = 50 V (z.B.) das 10-fache der Nennspannung $V_N$ = 5 V (z.B.) beträgt, fließt am Anfang der 100-fache Nennstrom ($100 I_N$) durch den Glühfaden (der Kaltwiderstand des Glühfadens ist etwa nur 1/10 des Warmwiderstandes). Dadurch steigt nun die Temperatur $\vartheta_L$ des Glühfadens sehr schnell - z. B. in $T_p$ = 1 ms - auf die Endtemperatur $\vartheta_{end}$ an. Da dann der Warmwiderstand des Glühfadens erreicht wird, sinkt der Strom I in dieser Zeit auf $10 I_N$ ab (da ja $V_H$ = 10 $V_N$).

Zu diesem Zeitpunkt nun muß der Impuls $T_p$ beendet sein, so daß der Transistor T1 nichtleitend wird und damit die Überspannung $V_H$ ganz von der Glühlampe L weggenommen wird. Andernfalls würde der Glühfaden überhitzen und schließlich zerstört werden. Die Temperatur des Glühfadens und damit die Strahlung der Glühlampe nehmen dann durch Abstrahlung der Wärmeenergie des Glühfadens mit der natürlichen thermischen Abklingzeit wieder ab.

Vereinfacht kann diese Betriebsart der Lampe wie folgt beschrieben werden. Durch einen kurzen Überspannungsimpuls wird dem Glühfaden ein bestimmter Energieimpuls zugeführt, der eine extrem schnelle Aufheizung auf eine bestimmte Endtemperatur bewirkt.

DIPL.-ING. HORST MÜNKEL

PATENTANWALT

BOZZARISSTRASSE 7
8000 MÜNCHEN 90
TELEFON (089) 640148

0062787

PE 8162

22. März 1982

grapho metronic Meß- und Regeltechnik GmbH & Co. KG
Gaisbergstraße 7, 8000 München 80

## Vorrichtung zum Messen der Feuchtmittelmenge auf der Druckplatte einer Offset-Druckmaschine

# P A T E N T A N S P R Ü C H E

1. Vorrichtung zum Messen der Feuchtmittel-Schichtdicke auf der Druckplatte einer Offset-Druckmaschine mittels auf eine bildfreie Stelle der Druckplatte gerichteter, impulsförmiger Lichtströme, deren mit Hilfe von Filtern innerhalb enger Wellenlängen-Bandbereiche im Infrarot-Spektralbereich ausgefilterte, auf photoelektrische Strahlungsempfänger remittierte Strahlung getrennt quantitativ erfaßt wird, wobei die elektrischen Ausgangssignale der Strahlungsempfänger in einer Auswertschaltung zu einem Schichtdickenwert ausgewertet werden, dadurch gekennzeichnet, daß die Lichtimpulsquelle durch eine zu einer Druckplatten-Relativstellung synchron helltastbare Lampe (20;42) gebildet ist und daß je Wellenlängenband ein Strahlungsempfänger (26,27;45,46) mit vorgesetztem monochromem Filter (24,25; 47,49) vorgesehen ist.

2. Vorrichtung nach Anspruch 1, dadurch gekennzeichnet, daß die Lampe (20;42) eine Entladungsblitzlampe ist.

3. Vorrichtung nach Anspruch 1, dadurch gekennzeichnet, daß die Lampe (20;42) eine im Kurzzeit-Überspannungsimpulsbetrieb gespeiste Glühfadenlampe ist.

4.   Vorrichtung nach einem der Ansprüche 1 bis 3, dadurch gekennzeichnet, daß sie parallel zur Achse des die Druckplatte (2) tragenden Plattenzylinders (1) verschiebbar ist.

5.   Vorrichtung nach einem der Ansprüche 1 bis 4, dadurch gekennzeichnet, daß die Lampe (20;42) von einer die Lichtimpulse auf einen engen Flächenbereich der Druckplatte (2) konzentrierenden Spiegeloptik (29) teilweise umstellt ist.

6.   Vorrichtung nach einem der Ansprüche 1 bis 5, dadurch gekennzeichnet, daß in einem Meßkopf (28) ein Lampenkanal (21;42) mit einer Lampe (20;42) im Innern und zwei Strahlungsempfängerkanäle (22;23) angeordnet sind, deren Kanalöffnungen auf einen gemeinsamen Fleck (2a) der Druckplatte (2) weisen, und daß in den Lichtempfängerkanälen (41,43) je ein Strahlungsempfänger (26,27) mit seinem Filter (24,25) untergebracht ist (Fig.  2).

7.   Vorrichtung nach einem der Ansprüche 1 bis 5, dadurch gekennzeichnet, daß in einem Meßkopf (40) ein Lampenkanal (41) mit einer Lampe im Innern und ein erster Strahlungsempfängerkanal (43) angeordnet sind, deren Kanalöffnungen auf einen gemeinsamen Fleck (2a) der Druckplatte (2) weisen, daß in dem Strahlungsempfängerkanal (43) ein Strahlungsempfänger mit seinem Filter (47) für einen Meßstrahl untergebracht ist und daß in einem zweiten Strahlungsempfängerkanal (48) im Meßkopf (40) ein zweiter Strahlungsempfänger (46) mit vorgesetztem monochromem Filter (49) für die Aufnahme eines Referenzstrahles einem direkten Lichtstrom der Lampe (42) ausgesetzt ist. (Fig.3)

8.   Vorrichtung nach Anspruch 6 oder 7, dadurch gekennzeichnet, daß die Lampen (20;42) und die Strahlungsempfänger (26,27;45,46) in einer Ebene liegen.

9.   Vorrichtung nach einem der Ansprüche 1 bis 8, dadurch
gekennzeichnet, daß die helltastbare Lampe (20;42) zur
Druckplatten   stellung derart triggerbar ist, daß ihr
Lichtimpuls im Bereich einer auf der Druckplatte (2)
befindlichen Farbkontrolleiste (54) auftrifft.

0062787

1/3

FIG.1

FIG.2

FIG.3

0062787

FIG.4

0062787

FIG.5

FIG.6

Europäisches
Patentamt

# EUROPÄISCHER RECHERCHENBERICHT

EP 82 10 2352.0

| | EINSCHLÄGIGE DOKUMENTE | | KLASSIFIKATION DER ANMELDUNG (Int. Cl.³). |
|---|---|---|---|
| Kategorie | Kennzeichnung des Dokuments mit Angabe, soweit erforderlich, der maßgeblichen Teile | betrifft Anspruch | |
| A | DE - A - 2 011 979 (R.C. OTTO & CIE.)<br>* Ansprüche 1, 2, 5, 6 *<br>-- | 1,2,4 | G 01 B   11/06<br>B 41 F   33/00 |
| A | DE - A - 2 141 247 (HARRIS INTERTYPE<br>CORP.)<br>* Ansprüche 1, 4, 10, 15, 17 *<br>-- | 1,7 | |
| A | DE - B2 - 2 736 663 (HEIDELBERGER<br>DRUCKMASCHINEN AG)<br>* Anspruch 2; Fig. 2, 8 *<br>-- | 6 | **RECHERCHIERTE SACHGEBIETE** (Int. Cl.³) |
| D,A | DE - B - 1 303 819 (ROLAND OFFSETMA-<br>SCHINENFABRIK FABER & SCHLEICHER)<br>-- | | B 41 F   7/24<br>B 41 F   33/00<br>B 41 F   33/10 |
| D,A | DE - B1 - 2 412 194 (GRAPHO METRONIC<br>GMBH & CO. et al. )<br>-- | | G 01 B   11/06 |
| D,A | DE - B2 - 2 412 234 (GRAPHO METRONIC<br>GMBH & CO. et al. )<br>----- | | |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 05-07-1982 | KÖHN |

EPA form 1503.1   06.78